## Europäisches Patentamt
## European Patent Office
## Office européen des brevets

(19)

(11) Publication number: **0 004 525**
**B1**

(12)

# EUROPEAN PATENT SPECIFICATION

(45) Date of publication of patent specification: **24.11.82**

(51) Int. Cl.³: **G 05 D 23/19,**
**F 24 F 11/00, F 24 H 9/20**

(21) Application number: **79850008.8**

(22) Date of filing: **31.01.79**

(54) *Control unit for starting operation of a conditioning equipment which is effective to influence the temperature in a building.*

(30) Priority: **28.03.78 SE 7803492**

(43) Date of publication of application:
**03.10.79 Bulletin 79/20**

(45) Publication of the grant of the patent:
**24.11.82 Bulletin 82/47**

(84) Designated Contracting States:
**BE CH DE FR GB NL SE**

(56) References cited:
**DE - A - 2 057 699**
**DE - A - 2 617 154**
**DE - A - 2 630 920**
**DE - B - 2 813 081**
**FR - A - 2 344 068**

(73) Proprietor: **TOUR & ANDERSSON AKTIEBOLAG**
**Svärdlangsvägen 46 Johanneshov**
**S-121 72 Stockholm (SE)**

(72) Inventor: **Christiansen, Jörn Uffe**
**Hvidovre Strandvej 48**
**Hvidovre (DK)**

(74) Representative: **Avellan-Hultman, Bengt**
**Hultmans Patentbyra Aktiebolag Jungfrugatan 16**
**P.O. Box 5165**
**Stockholm 5 (SE)**

Courier Press, Leamington Spa, England.

## Control unit for starting operation of a conditioning equipment which is effective to influence the temperature in a building

From the German patent specification DE—A 2.617.154 a control unit is known, used for starting a climatization process in a building. It is thereby assumed that the building which is used during day hours only and/or the working days of the week only was left inbetween these times without climatization, such as heating, cooling, ventilation and so on, independently of whether said climatization is used to provide heating or cooling of the building to its desired comfortable temperature.

According to said German patent specification, an equivalent electric circuit is provided, simulating the extent of heating the building by means of an electric discharge current or charge current or equalization current representing the application of heat to the building or the removal of heat from the building, respectively. This electric equivalent circuit is controlled at least by the outside temperature and the internal temperature of the air in the building, but other climatic conditions may also influence the function and operation of the electric equivalent circuit, such as the speed of the wind, the moisture and so on. Further, the electric equivalent circuit is, with respect to the value of its elements such as condensors and/or resistors adjustable to correspond to the properties of the building.

The said control unit functions in such a way that during discharging, charging or voltage equalization of capacitors in the equivalent electric circuit generation of high frequency pulses will take place, said pulses being fed to a counter which is so constructed that guided from a given starting point of time before the time proper when the desired comfortable temperature or the desired comfortable condition should exist inside of the building and in dependence on the number of pulses counted during the period of time for a predetermined change of the charge of the capacitors of the equivalent electric circuit, the counter is used to determine the correct time for starting the climatization system for the building so that it will be started as late as possible but nevertheless at such a time that the comfortable climatic condition will have been achieved at the time when the building shall again be taken into use. By this it is desired to decrease the need of power consumed by the climatization system as far as possible without thereby detracting from the desired climatic conditions during the time when the building is in use.

In another arrangement for adjustment of the room temperature, described in the German patent specification DE—A—2.630.920 it is said that the operation of the heating or climatization arrangement should preferably be dependent upon said kind of combination of the inside air temperature in the room and the temperature inside of the walls of said room. For this purpose, the two temperatures are measured and some sort of mean temperature is calculated on basis of which the climatization is effected. A rather similar arrangement is described in the German patent specification DE—B—2.823.081 and also in the French patent specification FR—A—2.344.068.

The present invention regards an improvement of the system according to the German patent specification DE—A—2.617.154 mentioned above by which an increased accuracy is obtained and also more simple and reliable operation is achieved, and in which as many as possible of the factors can be taken into account, which may influence ·the faultless operation of the climatization process.

In the system for the same purpose, described in said German patent specification DE—A—2.617.154 as well as in the system according to the present invention, an equivalent electric circuit is used, by which the conditions are simulated during the climatization of the building after a period of time during which it was unused. This is made by connecting into the equivalent electric circuit condensors simulating the heat capacity of different parts of the building and electric resistors simulating the heat technical resistance of parts of the building and voltages simulating the temperature in part inside of the building, in part outside of the building. The condensors are charged by a voltage corresponding to the outside temperature conditions and a voltage difference is created under use of voltage values corresponding to the inside temperature conditions.

In the said known arrangement, the fact is used that the equalization of the voltages at charge or discharge of the condensor or condensors, respectively, will follow an exponential curve of the same general shape as the exponential time dependent curve along which the conditioning of the building will take place under influence of for instance a heating system, which takes place in such a way that the simulator unit is started a given period of time in advance of the heating procedure, the voltage of the condensors of the equivalent electric circuit thereafter being allowed to equalize until there exists a state of voltages corresponding to the desired climatic conditions in the building. During the equalization of the voltages, high frequency pulses are fed to a counter. This counter, however, is limited to receive a completely exact number of pulses. When the equalization of voltages has taken place the frequency of the pulse train is very much decreased, for instance in the relation of 1:10 000, whereafter the counter is allowed to continue its counting with this lower pulse frequency. When the maximum number of pulses has been counted, a waiting period of time has been identified which will, thus, be shorter the longer the time of voltage equalization and the longer the waiting period of time is, the shorter will the period of time be which remains until the work starts again in the building and *vice versa*. In this way one can get a good proportionality between the time of the voltage equalization in the equivalent electric circuit and the time required for the conditioning of the building before it is taken into use.

When the building is cooled down due to its heating being shut off, however, a lag will exist, the air in the interior of the building having rather small heat capacity, whereas, on the contrary, the internal walls, the furniture and other equipment in the building has essentially greater heat capacity, and, consequently, at the beginning of the conditioning process, in which the air in the building is heated, this air will be colder than the said solid parts inside the building but rather soon the conditions will be reversed, and at the end of the heating period the air in the building will normally be essentially warmer than the solid parts in the building, below in common referred to as the "internal walls". This means that if the heating is stopped as soon as the air has got the desired comfortable temperature, then this air will rather soon be cooled down by heat being given off to the internal walls. This state of affairs, of course, is not satisfactory, and, therefore, it has been found in connection with the works forming the basis of the present invention, that a subsequent functioning of the heating system, after the moment when the air inside of the building has got to the desired comfortable temperature, is desirable in order to compensate for the loss of heat in the air by heat being given off to the internal walls.

The invention, thus, concerns a control unit for starting operation of a conditioning equipment which is effective to influence the temperature in a building after a period of time during which the said equipment has been inoperative, in which unit an electric equivalent circuit is arranged to simulate the thermal properties of the associated building during heating or cooling, said electric equivalent circuit being fed with a voltage simulating the internal temperature of the air in the building as well as with a voltage simulating the external temperature outside of the building, and a charge or a discharge or a voltage equalization of one or more condensors contained in the electric equivalent circuit takes place over resistors in order to simulate the period of time required for attaining a desired temperature in the building, said charge or discharge or voltage equalization time being measured by counting pulses from a pulse generator so that said time will be very short as compared with the time for attaining the desired temperature in the building, said time being used for calculation of the correct moment for starting operation of the conditioning equipment so that no unnecessary time shall lapse during which the conditioning equipment is working but in spite of this the desired temperature shall be attained at a given time, a sensor being provided for sensing the temperature of the internal walls in the building.

According to the invention, a control unit as above defined is characterized in that the last mentioned sensor is arranged so as to energize a circuit for feeding an additional voltage to the voltage indicating starting operation of the conditioning equipment after the moment of the charge or discharge or voltage equalization ending, when otherwise the conditioning equipment would have turned over to normal functioning, e.g. thermostatically controlled function, said additional voltage being applied at least from said moment of end of the charge or discharge or equalization and remaining until the difference between the temperature of said walls and the temperature of the air in the building has decreased to a predetermined level, said circuit being arranged to cause attraction of a first relay for keeping said normally functioning conditioning equipment working independently of the state of a second relay, the contacts of said relays being connected in parallel to starting means for said normally working conditioning equipment, said second relay being exclusively controlled by the existing temperature of the air inside the building and the temperature outside of the building.

In a further improvement of the above defined control unit according to the invention, the sensor for the temperature inside of the internal walls of the building is, under normal circumstances, disconnected from the electric equivalent circuit but is connected to the same when a timer indicates starting of a pulse generator governing the operation of the control unit.

The invention will be further described below in connection with an embodiment shown in the attached drawings, but it is understood, that the invention shall not be limited to the specific embodiment but that all different kinds of modifications may occur within the scope of the invention.

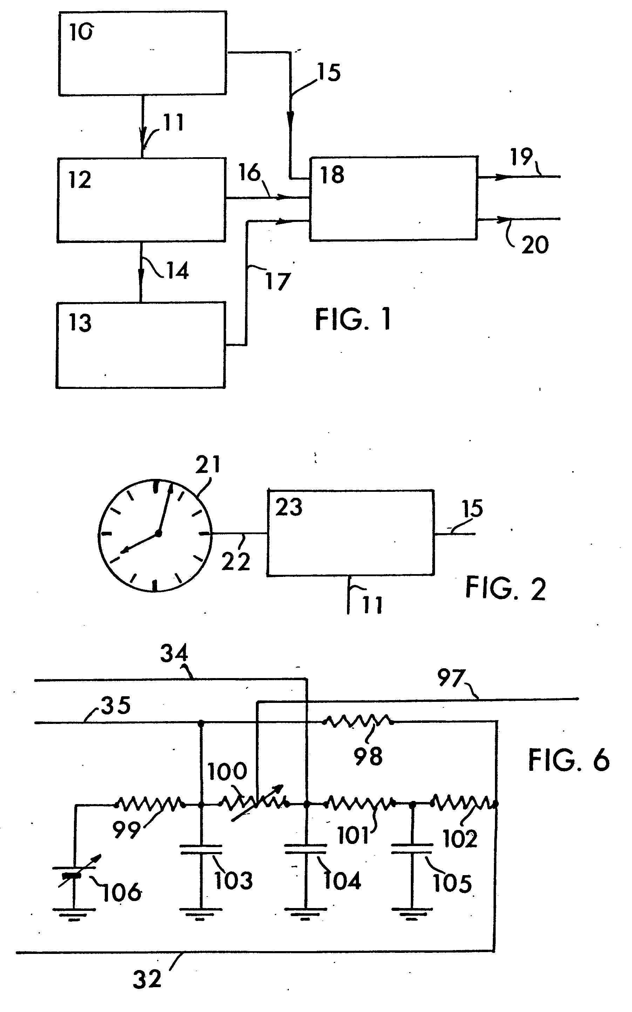

In the drawing, Fig. 1 shows a general block diagram of a control unit according to the invention, comprising a time determining circuit, a pulse circuit, a temperature sensing circuit and a control circuit.

Fig. 2 shows the time determining circuit,
Fig. 3 shows the temperature sensing circuit,
Fig. 4 shows the pulse circuit, and
Fig. 5 shows the control circuit.
All of the figures 2—5 are in block diagram form.

Fig. 6, finally, shows a preferred embodiment of the electric equivalent circuit.

Description of Selected Embodiment

In Fig. 1, thus, the time determining circuit is shown, which has for its purpose to connect or disconnect the arrangement, respectively, at given moments of time, which are either at the beginning of working hours or at the end of them and/or before the working time of the day starts on a Monday after a weekend or at the end of working hours during the preceding Friday. This time determining circuit 10, over a conduit 11, is connected to a pulse generating circuit 12, which creates pulses of the frequency described below, and also counts them and compares them with voltages derived from the electric equivalent circuit. This latter circuit is contained in the temperature sensing circuit 13 to which the pulse circuit is connected by means of the conduit 14. All of the three conduits 10, 12 and 13 now mentioned are connected by their group of conductors proper 15, 16 and 17, respectively, to a control circuit 18, which can, over conductors 19 and 20 start or stop, respectively, the conditioning system concerned. For the matter of simplification this one will in the following be described as if it comprises a heating vessel for radiator heating of the localities, the air of which should be conditioned, but this should only be understood as an explanation and simplification but not as a limitation of the scope of the invention. Thus, it may as well concern some other type of air conditioning system, for instance a cooling system or an equipment for ventilation with respect to which one desired to avoid wasteful consumption of power during periods of time when the building is not used.

The time determining circuit which is shown schematically in Fig. 2, comprises a timer 21 which is shown here in the form of a twelve hour clock. In reality, the timer should, of course, have a longer periodicity. If the conditioning system is only shut off during night hours, the clock may have a periodicity of twenty four hours, but if the conditioning system should also be shut off during weekends it should have a periodicity of one week. The timer 21, by means of conduit 22, is arranged to influence a logic circuit 23. This is, over the conduit 11, connected to the pulse circuit 12 of Fig. 1 in a way which will be described later on, and it is also, over the conduit 15, connected to the control circuit 18, also in this case in a way which will be described below.

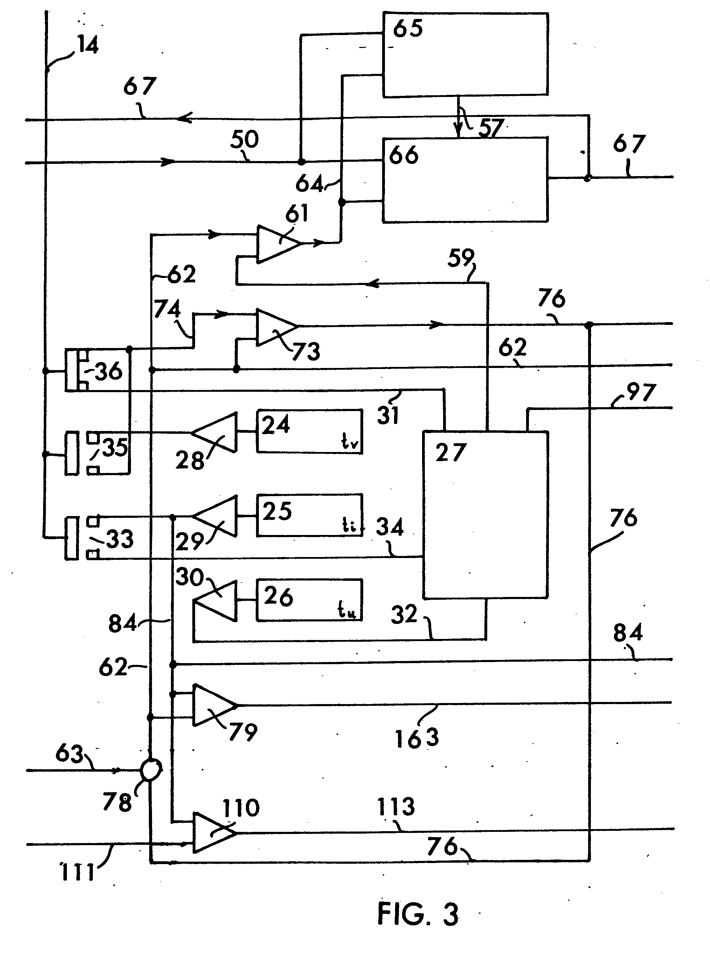

The temperature sensing circuit 13 is shown in block diagram in Fig. 3. The input temperature information is derived from three temperature sensors 24, 25 and 26, which may be thermistors along with the circuit elements pertaining thereto. The temperature sensor 24 senses the temperature of the internal walls of the building, below indicated as $t_v$, while the temperature sensor 25 senses the internal air temperature in some given place in the building which may be regarded representative for all of the building, but it is, of course, also possible, for this purpose, to use some combination of a plurality of cooperating sensors known *per se*.

This temperature, in the following, will be indicated $t_i$. The temperature sensor 26, finally, senses the air temperature outside of the building, below indicated by $t_u$. The electric equivalent circuit, comprising combinations of resistors and condensors, by means of which the heating conditions in the building are simulated, is indicated by 27.

Each of the three temperature sensors 24, 25 and 26 of Fig. 3 is connected to an amplifier 28 or 29 or 30, respectively. These amplifiers have the purpose of providing voltages in the form of a pure direct current voltage, which is proportional to the usually rather weak voltage from the temperature sensor concerned, the amplified voltages being better adapted for the control purposes concerned.

The output circuit from the amplifier 30 of the temperature sensor 26 for the outside air temperature $t_u$ is connected, over a conduit 32, to the electric equivalent circuit 27. The amplifier 29 of the temperature sensor 25 for the internal air temperature $t_i$ is, over an electrically controlled switch 33 as well as a conduit 34, connected to the equivalent electric circuit 27. An advanced embodiment of same will later on be described in connection with Fig. 6. Thus, it should be mentioned that the internal temperature $t_i$ in the building only starts influencing the climatization process or the heating process in the building after an electronically controlled switch 33 has been closed. The electronically controlled switch 33, as a matter of fact, co-operates with two further electronically controlled switches 35 and 36 under influence of a current which is transferred from the pulse circuit 12 of Fig. 1 by means of the conductor 14.

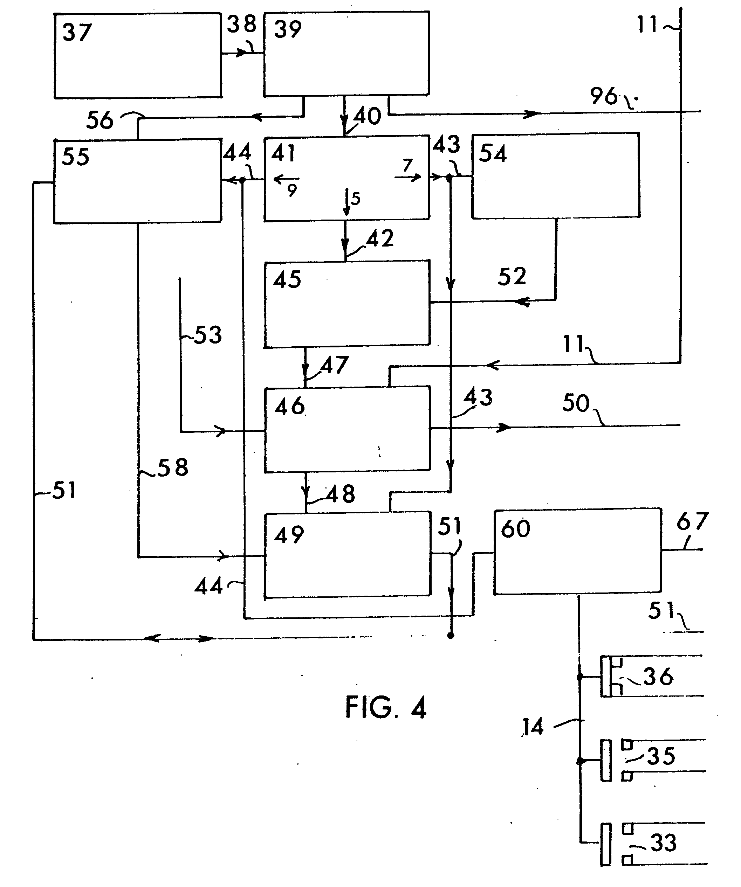

To make the coupling arrangement more clear, the conductor 14 along with three electronically controlled switch contacts 33, 35 and 36 have been shown both in Fig. 3 and in Fig. 4.

Now, it may be suitable to give account in short terms of the parts of the pulse circuit concerned. This circuit is shown in detail in Fig. 4. The oscillator 37 works as the basic pulse generator in this circuit. It has a very high pulse frequency, which may for instance be 1 megacycle per second. This pulse frequency, of course, is not of importance for the invention, and there is a possibility to use other pulse frequencies. However, generally, it is advantageous if the said pulse frequency is high because the pulse generator or oscillator preferably is crystal controlled in order to create a constant pulse frequency of a lower order of magnitude for given subsequent circuits, as will be described later on. It is well known to the man skilled in the art that the relative constancy of any such working circuit may be considerably improved if one creates first a very high constant frequency and, thereafter, by frequency division decreases this frequency to the working frequency.

The pulses from the generator-oscillator are, over the circuit 38, transferred to a binary pulse counter 39, which has for its purpose, in first place, to cause such a frequency division by means of suitably arranged coincidence circuits. This part of the arrangement could scarcely require any further description as it is well known to any man skilled in the art how said process takes place. The result of this frequency division, nevertheless, will be that pulses of a considerably lower frequency will be transmitted in the output circuits 40, 56 and 96 of the pulse frequency divider 39. This reduced frequency, when following up the above given example value of the basic frequency, may be assumed to be 2 kilocycles a second. In this connection, it should be pointed out that it is possible by successive pulse division by two to reduce the frequency of 1 megacycle a second to 1 953 125 periods a second which may with satisfactory approximation be said to be 2 kilocycles a second.

One of the three output circuits from the binary pulse frequency divider 39 is, over the conduit 40, connected to a decadic counter device 41 for re-calculation of the binary pulses into the decadic system, i.e. to provide conversion from a binary to a base ten system. This decadic counter 41 may but must not necessarily further reduce the frequency of the pulse train transferred over the conductor 40.

However, the decadic counter is arranged to transmit signal pulses through its output conduits 42, 43 and 44 in a given order of time, viz. to produce a pulse in the conductor 42 each time when the decadic series of figures ends on the cipher 5, in the conductor 43 each time when the decadic series of figures ends on cipher 7, and in the conductor 44 each time when the decadic series of figures ends on the cipher 9. These end ciphers, of course, are arbitrarily chosen, and they could as well have other values. Preferably, each such end cipher should differ from the one next before and from the one next after by two units.

The pulse frequency of these three decadic series of figures in the re-calculator 41 is, in the preferred embodiment, 84 pulses a second, but, as before, the number of pulses may be chosen in another way. The pulses carrying the end cipher 5, thus, run with a number of pulses of 8.4 pulses each second to a logic circuit 45, which controls directly a binary counter 46 over the conduit 47 and also, over the output of the binary circuit 48, controls a secondary counter 49.

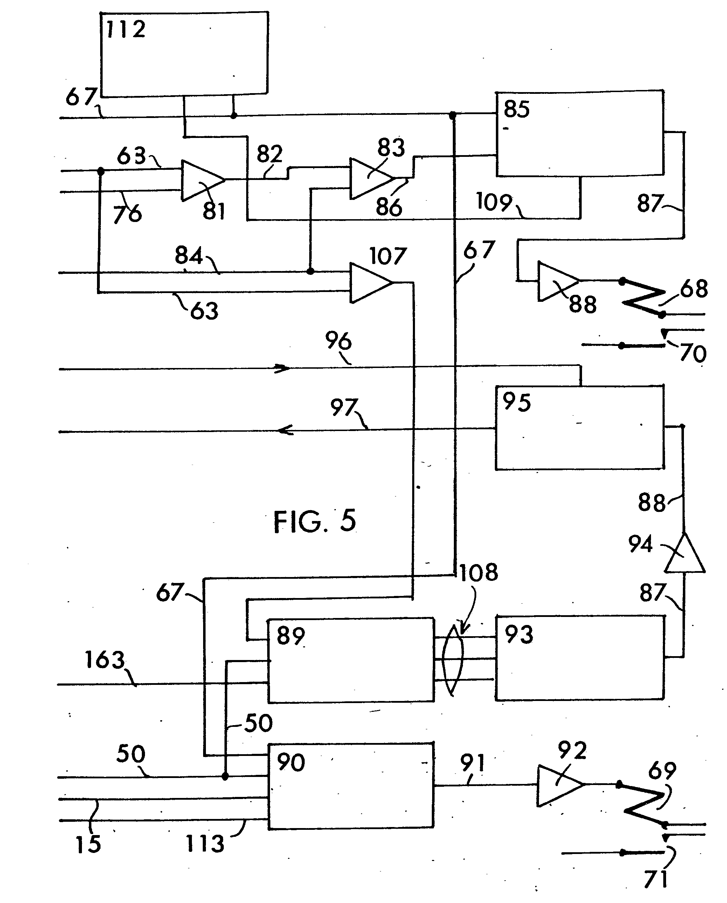

The two binary counters 46 and 49 are constructed for counting $256 = 2^8$ steps. They are provided with eight output conductors, bundled together into cluster of conductors 50 and 51, respectively. The two binary counters 46 and 49, however, are further subjected to the influence of control signals, one of which being introduced over the conductor 52 and the logic circuit 45, and the other one over the conductor 53 and the binary counter 46. These control signals act in such a way that, when such a signal is fed into the binary counter 46 or 49, concerned, then the counting of pulses ceases in said binary counter. Further, an input circuit to the binary counter 46 is connected to the conductor 11 from the timer actuated counter 23, Fig. 2, whereby it is possible to determine if the counting in the binary counter is taking place or not. If a signal is tranferred over the conduit 11, allowing the binary counter 46 to work, so will the counter 46 thereafter count pulses until a given end position. When it has reached this value, the said state is marked by voltage being connected to an output conductor 50 from the binary counter 46 to components shown in Fig. 5.

When a pulse with the end cipher 5 has been registered in the logic circuit 45 of Fig. 4, a pulse having the end cipher 7 will be fed to the device 54 acting as a monostable switch for pulses. This is then switched over so that it will create a temporary stop signal fed over the conductor 52 to the logic circuit 45, and, as a consequence thereof, this logic circuit 45 will not register the pulse of the end cipher 5 following next thereafter. When then another pulse having the end cipher 7 is transferred to the monostable switch 54, this is again turned over and the stop signal over the conductor 52 is removed with the consequence that the logic circuit 45 will again register the next pulse of the end cipher 5 over the output circuit 42. In this way, the logic circuit 45 will only register every second pulse with the end cipher 5.

As the pulse frequency of the decadic series was 84 pulses each second, the distance in time between each such step fed pulse and the next one will be 168 seconds, which means that the counting of 256 steps will take a time of 12 hours. As a matter of fact, the indicated pulse frequency time will be 182 seconds shorter than 12 hours, but this little error in time is without any importance, because it is not accumulated from one day to another one, because the entire system is started again every day by influence of the timer 21. The conductor 53 is connected to a manually or automatically controlled device, by means of which one can transmit a stop signal to the binary counter 46, connected to some suitable place in the coincidence circuits, so that the counting will stop after one fourth or after the half or after three fourths of the said time of twelve hours or, in other words, after three hours or after six hours or after nine hours. Of course, it is most suitable to provide three different conductor wires, which have, however, been symbolized in Fig. 4 by means of the single line 53. As soon as the given period of time of these three or six or nine hours has lapsed, a marking signal is transmitted over the cluster of wires 50 to parts of the system according to the invention, which will be described in connection with Fig. 5, because they rather belong to the control circuit, which is the one shown in said figure.

Although each pulse from the decadic counter 41 of Fig. 4 having 7 as its end cipher was fed to the monostable switch 54 in order to control the operation of the logic circuit 45, the output conduit 43, however, is branched off also to the binary counter 49 from switch 54. Also here, the said pulses serve as stop signals, and, consequently, the two binary counters 46 and 49 will get the same pulse frequency and the same indication of time in their output clusters of conduits 50 and 51, respectively.

The logic circuit 55 gets pulses of two different kinds, viz. high frequency pulses of a frequency which was above as an example said to be 2 kilocycles a second, over the conduit 56 from the pulse frequency divider 39, and also pulses over the conduit 51 which forms the ouput circuit from the binary counter 49. The pulses with 9 as their end cipher from the decadic counter 41 cause the logic circuit 55 to enable feeding of the pulses from the pulse frequency divider 39 over conduit 56, the logic circuit 55 and the conductor 58 to the binary counter 49. This pulse counting, however, is stopped by the logic circuit 55 when the maximum number of pulses has been counted. In the parts hitherto described the coupling arrangement functions in the following way:

It shall first be assumed that the pulse switch 54 is in such a position that the logic circuit will transmit pulses of the end cipher 5 from the decadic counter 41 to the binary counter 46. When this pulse of the end cipher 5 is transferred over the conduit 42, it will pass through the logic circuit 45, and, consequently, the binary counter 46 will be stepped forward by one step. With the intervals of time explained above, therefore, 16.8 seconds will pass, until another decadic pulse with the end cipher 7 is transmitted over the conduit 43. This will cause two operations:

Firstly, the pulse will by means of the pulse switch 54 control the binary counter 45 in such a way that the pulse with end cipher 5, following next thereafter will not be counted.

Secondly, this pulse of the end cipher 7 will cause the binary counter 45 to transfer the pulses from its input circuits to its output circuits.

After a further period of time of 16.8 seconds, a pulse with the end cipher 9 is transmitted by means of the output circuit 44, and this pulse will then influence the logic circuit 55 so that the quick pulses from the pulse frequency divider 39 may pass over the conduit 58 and step the binary counter 49 forward until it reaches its predetermined maximum value of counted pulses. It may happen that the binary counter 49 at the same time is in its initial position, and then 120 milliseconds are required in order that it shall reach its maximum value. This period of time of 120 milliseconds in the binary pulse counter 49, therefore, corresponds to a period of time of twelve hours in the binary counter 46.

Through conduit 44, which only contains such decadic counter pulses, the end cipher of which is 9, however, these pulses also reach a logic circuit 60, which, over conduit 14 feeds current to the three electronically controlled switches 33, 35 and 36 so that they are actuated, the switches 33 and 35, thereby, being closed, and the switch 36 being opened.

In this way, the activity of the remaining parts of the system according to the invention is initiated, and, therefore, reference shall now again be made to Fig. 3, just mentioned.

It will be evident from the above that by the function of pulse circuit 12 of Fig. 1 such as explained in connection with Fig. 3, a time program with fixed and well defined intervals of time has been created so that, so to say, a time scale has been obtained which may be used for starting the heating system as late as possible, nevertheless, however, so early that full conditioning of the air inside of the building shall have been obtained at the time for its renewed taking into use. By this, the double advantage is gained that there is not only no unnecessary consumption of power by the heating system being started too early, but also full conditioning of the air will have been achieved to the comfortable temperature when the building is taken into use again after an interruption of the conditioning.

The electric equivalent circuit 27, over the conductor 59, is connected to one of the inputs of an amplifier 61, the other input of which is connected, over a conduit 62, to a conduit 63 from some device with the task to indicate by means of a voltage the desired, comfortable temperature in the building. This conduit 63, in the following, will be referred to as the "optimum temperature conduit". It is adjustable manually from some place not shown in the drawing in order to create a voltage simulating the inside temperature, e.g. 20°C, which the air within the building should have when work in the same shall again start.

If, now, the amplifier 61 should show similarity or a given relation between the state in the form of a voltage impressed thereon from the equivalent electric circuit 27, on the one hand, and the voltage, which is fed, over the conduit 62, from the optimum temperature conduit 63, on the other hand, then this will mean that the desired comfortable air temperature has been obtained inside of the building. Thereby, a signal is transmitted, over the conduit 64, to the two logic circuits 65 and 66 in parallel. These logic circuits 65 and 66, however, also have another input, which is fed in parallel from the conduit 50 leading from the binary counter 46, Fig. 4. The logic circuit 65 has for its purpose to register the state of the amplifier 61 at the moment when the signal arrives over the conduit 64 and to transmit, over the conduit 57, a signal to the logic circuit 66. This signal compares the state of same amplifier 61, however, at the end next before of the testing period of 84 seconds, said period of time being measured in the way apparent from the above. Thus, to provide redundancy, the logic circuit 65 receives a signal indicating the state of the amplifier 61 and transmits a corresponding signal to the logic circuit 66 for storage. The next signal from the logic circuit 66 will again be received by the logic circuit 65. The redundancy proceeds as described below.

Now, it may first be assumed, that the signal over the conduit 64 from the amplifier 61 indicates, at a given time, that the comfortable temperature, such as this has been simulated in the electric equivalent circuit 27 along with the voltages fed to same from the sensors 25 and 26, has been achieved, which, of course, only is a symbolic matter of fact but does not mean that the temperature proper in the building has been increased to the value concerned. The corresponding signal is then transmitted by the logic circuit 65 and stored in the logic circuit 66 whereafter the logic circuit 65 returns to the original state thereof. The procedure described above is repeated after a period of time of 84 seconds, when another signal is transferred to the logic circuits 65 and 66. Also this renewed signal is transferred from the logic circuit 65 to the logic circuit 66 where the result of the test next before has previously been stored. If, in this way, two tests following each other with a time difference of 84 seconds, should prove that the desired temperature has been achieved, which is still only simulated by the electric equivalent circuit 27, no start signal is given off through the output conduit 67 to the control circuit 18, which is further described in Fig. 5, and which should otherwise have caused starting of the heating system in order of the conditioning proper of the air in the building taking place.

Here, it should especially be emphasized that because the logic circuit 55 of Fig. 4, as explained above, is only stepped forward every second time when a combination of figures with the end cipher 9 is given off to same from the decadic counter 41, two consecutive equivalent tests will always follow immediately after each other, said tests having identically the same length of time.

If two tests, following in this way after each other should give mutually different results, nothing further happens in the system but the tests continue with the above mentioned repetition periodicity of 84 seconds.

If, on the other hand, two tests following immediately after each other with a duration each of 84 seconds should prove that in neither of said cases had the desired optimum temperature been reached in the electric equivalent circuit 27 of Fig. 3 simulating the increase of temperature, then this is taken as a proof of that the heating system should be started. In this case, a start signal is given off to the control circuit 18 from the logic circuit 60 over the output conduit 67 and the heating system is started in a way which will be described in connection with Fig. 5.

The total time for the two tests amounting to 168 seconds of less than three minutes, of course, is short when compared with the actual heating time, which may, dependent upon how far the cooling had proceeded during the period of inactivity, for instance amount to twelve or nine or six hours, said periods of time being manually or automatically set on basis of experience or measurements, respectively, of the heating time period of the building at different outside conditions, by means of the optimum temperature circuit 63 of Fig. 3 and its time dependency. The fact that two tests following after each other are used for determining if the heating system should be started, however, causes a practically complete security against failure function of the system. It should be mentioned now that the starting of the heating system normally takes place by energization of relay 68 of Fig. 5, but under given circumstances this may also take place by energization of a relay 69, their contacts 70 and 71, respectively, being connected into the starting conduits of the heating system. This part, however, will be described later on in connection with Fig. 5.

The output conduit 67 from the logic circuit 66, Fig. 3, however, is also branched off to the logic circuit 60, Fig. 4, with the result that the three electronically controlled switch contacts 33, 35 and 36 are reversed. This causes a rearrangement of the voltages fed to the electric equivalent circuit 27, Fig. 3. Thus, at the contact 36 the conduit 74 is disconnected from conductor 31 and the said amplifier 73 is connected through contact 35 and amplifier 28 to the wall temperature sensor 24. The amplifier 73, at the other input thereof, is through contact 52 and over the resistor coupling 78 (described below) connected to the optimum temperature conductor 63. The amplifier 73, thus, will measure the difference between the wall temperature $t_v$ and the optimum temperature so that the voltage in the output conduit 76 of said amplifier 73 will vary at least approximately proportional to said voltage difference. The output circuit 76, however, is also branched off to the combination of resistors 78 in the optimum temperature conductor 63 so that, as a matter of fact, the input signal to an amplifier 79 with two input conduits will, as far as regards the conduit 62 form a combination, e.g. the sum of the optimum temperature voltage and the said voltage difference in the output circuit 76 from the amplifier 73.

When a building is cooled due to the fact that it has not been heated during the period of time when it was not used, the walls are also cooled although, due to their heat capacity, at a lower speed than the air in the interior of the building. Upon heating, the circumstances will be reversed. Consequently, at least during an essential part of the end of the heating period, the temperature of the internal walls of the building, especially the intermediate walls, is lower than the inside air temperature. If the conditioning should now be controlled exclusively by the temperature of the outside air and of the air in the interior of the building, so that the heating will be interrupted when the last mentioned temperature has risen to the optimum value, then a cooling of the air would immediately start by heat being transferred from the air in the building to the walls, increasing the lag in temperature change in the walls.

To avoid this disadvantage, a separate sensor 24 with its amplifier has been provided for sensing the temperature $t_v$ of the internal walls. This sensor 24, normally, is not connected to the equivalent circuit 27, the contact 35 being open, but at voltage on the conductor 14 this contact is close simultaneously with opening of the contact 36.

Thereby, first, an equalization of the voltages on the condensors in the electric equivalent circuit will take place by the sensor 25 for the interior air temperature $t_i$ along with its amplifier 29 being connected to said equivalent electric circuit 27, and thereafter in the way described above a sensing of the interior air temperature $t_i$ will reach a level which after completion of the equalization would cause the heating to stop, if no booster circuit existed.

The voltage difference between the interior air temperature $t_i$ and the wall temperature $t_v$, thus, is introduced after amplification in the amplifier 73 into the control procedure. Over the conduit 76, thus, a voltage representing the wall temperature $t_v$ is transferred to an amplifier 81, Fig. 5, by means of one of its input circuits but simultaneously by means of its second input circuit and over the conduit 63 a voltage representing the optimum temperature is fed so that a voltage will appear in the output circuit 82 of the amplifier 81, below referred to as the "booster voltage", said voltage being a little higher than the voltage which would represent the internal air temperature $t_i$. This voltage is fed, over the conductor 82, to an amplifier 83 having two inputs. The other input of this amplifier 83 is connected over the conduit 84 to the output side of the amplifier 29 which will, therefore, carry a voltage representing in amplified form the interior air temperature $t_i$ in the building as sensed by the sensor 25. In this way, one will get a comparison between the two voltages $t_v$ and $t_i$ over the conductors 82 and 84 in the amplifier 83.

Consequently, when the air temperature $t_i$ inside of the building has reached a higher value required for compensation of the expected loss of heat to the walls which is indicated by the amplifier 81, a signal will be transmitted from the amplifier 83 to a logic control circuit 85 over the conduit 86. At this time, the control circuit 85, when the said voltage value has been achieved, will cause that the current in the conduit 87 and the amplifier 88 to the relay 68 is cut off, so that this relay will fall and its contact 70 will be opened, and the temperature controlled operation of the heating system will cease and a normal thermostatically controlled operation will begin.

Simultaneously with the attraction of the relay 68 for the normal operation of the heating system, however, also the relay 69 is energized, however, without any other effect than its contact 71 is closed in parallel to the closed contact 70 of the relay 68.

The above mentioned circuit, however, provides that also after the opening of the contact 70 will the contact 71 remain closed. This state will continue during a period of time even if the heating operation is not effected according to the thermostatic control. The end of this additional period of time is determined by the timer circuit according to Fig. 2 by a voltage drop on the conductor 67 and due to its connection to the logic circuit 90 de-energizing relay 69.

In this way, thus, security has been gained for a subsequent heat creation in the building for compensation of the loss of heat, caused by the heat of the air in the building being transferred to the initially colder internal walls.

As an alternative of the above mentioned arrangement one may over a conduit 109 connect the circuit 85 to a separate timer 112, which is, thus, started simultaneously with the de-energization of the relay 68 but which, over the conduit 67, acts upon the logic circuit 90 so that the relay 69 will remain attracted during a period of time adapted for the said equalization of the temperature of the air and the internal walls.

In Fig. 4, a binary counter 46 is shown the function of which has previously been briefly described. An output circuit 50 from this binary counter 46 runs to a logic circuit 89, Fig. 5, as well as to a logic circuit 90. These two logic circuits are connected in a greater circuit arrangement which could be said to form an adaptive circuit for improving the adaption of the heating procedure to the internal conditions of the building. At a given voltage in the logic circuit 90 as amplified in the amplifier 92 in the output circuit, thus, said voltage will cause the relay 69 to be energized and to close its contact 71.

As a matter of fact, it may happen that the desired agreement between the actually existing heating conditions, on the one hand, and the heating conditions symbolized in the electric equivalent circuit, on the other hand, do not exist which may depend upon many different circumstances which are impossible to discover in advance, such as the execution of heat creating job within the building or the like. In such a case, the logic circuit 89 will become active, thereby causing, over the bundle of conduits 108, a distribution circuit 93, a conduit 87, an amplifier 94 and a conduit 88 as well as a logic circuit 95 a temporary correction of the constants of the equivalent circuit 27. The logic circuit 95, thus, is also fed with pulses over the conduit 96 from the pulse frequency divider 39, Fig. 4. In the case of a disagreement, the circuit 95 gives off a signal over the conduit 97 to the equivalent circuit 27 for correction of the error between the symbolic properties and the real properties of the heating system, the building and so on.

The electric equivalent circuit is shown in the form of an exemplary embodiment in Fig. 6. The different input conductors to the electric equivalent circuit according to Fig. 6 are the conductors 32, 34, 35 and 97 previously mentioned, the three first ones of which being connected to the amplifiers after the sensing means for temperatures in order to introduce the voltages determining climatization, whereas the last one forms the correction conduit. It is without any decisive importance to the present invention in what manner the coupling elements of the electric equivalent circuit represent properties important to the extent of heating of the building and, for this purpose, therefore, reference is made to the above mentioned patent specification DE—A—2 617 514.

The circuit, thus, is shown in Fig. 6 to be composed of five resistors 98—102, three condensers 103—105 and an electric source of current 106. The resistor 100 is variable under influence of a voltage which is fed over the correction conduit 97. For instance, it may be formed by a magneto-restrictive resistor under influence from a magnetic winding fed with current over the conduit 97, or it may be a thermo-variable resistor influenced by a heater winding which gets, in turn, its heating current over the conduit 97. The source of electric voltage 106 is intended for manually adjusting the electric equivalent circuit to adapt the voltage obtained after amplification from the different temperature sensing means.

The adaptive system just mentioned is controlled by the amplifier 107, Fig. 5, which is fed at one of its inputs over the conductor 84 with a voltage from the amplifier 29 connected to the sensing means 25 for the internal air temperature $t_i$, and at the other input with the optimum temperature voltage over the conductor 63. It delivers its output voltage to the logic circuit 89. The logic circuit 89, further, is connected to two further input conduits, viz. the conduit 163 from the amplifier 79, Fig. 3, which receives at one input the voltage from the amplifier 29 following after the sensing means 25 for internal air temperature $t_i$ and at the other input a signal on the conduit 63 indicating the optimum temperature voltage. The logic circuit 89 also is connected to the conductor 50 from the binary counter 46 previously mentioned. In this way, it is possible, by comparison of voltages in the logic circuit 89, to establish whether the air temperature $t_i$ in the interior of the building has reached the desired optimum temperature before or after the signal from the binary counter 46 carried by the conduit 50 indicates that the binary counter has counted its maximum number of pulses. Dependent upon the result of this control, the required number of pulses is added or deducted, respectively, in the counter 93 which will, after the correction of the number of pulses, over the amplifier 94 influence the logic circuit 95. Also this correction is transferred, over the conductor 97, to the electric equivalent circuit for its subsequent correction.

As a further matter of security, the output circuit from the amplifier 29 provided for the interior air temperature $t_i$ is connected to one of the inputs of an amplifier 110, Fig. 3, which is, with its other input 111 fed with a fixed or adjustable voltage serving to limit the function of the logic circuit 90. The output conduit 113 forms one of the four input conduits of the logic circuit 90, Fig. 5, the remaining input conduits of which are the conduit 67, the conduit 50 and the conduit 15 from the timer circuit, Figs. 1 and 2.

This last mentioned arrangement functions such that if the air temperature in the interior of the building when checked in the amplifier 110 would prove to be, for one reason or another, below the normal value, then, over the conduit 113, a signal is transmitted to the logic circuit 90 and through this over the conduit 91 to the amplifier 92 whereby the relay 69 will be energized and, by closing its contact 71, add the required additional heating. The normal thermostatically controlled function of the heating system, in spite of this, continues to be controlled over the contact 70 of the relay 68.

## Claims

1. Control unit for starting operation of a conditioning equipment which is effective to influence the temperature in a building after a period of time during which said equipment has been inoperative, in which unit an electric equivalent circuit (27) is arranged to simulate the thermal properties of the associated building during heating or cooling, said electric equivalent circuit (27) being fed with a voltage simulating the internal temperature ($t_i$) of the air in the building as well as with a voltage simulating the external temperature ($t_u$) outside of the building, and a charge or a discharge or a voltage equalization of one or more condensors (103—105) contained in the electric equivalent circuit (27) takes place over resistors (99—102) in order to simulate the period of time required for attaining a desired temperature in the building, said charge or discharge or voltage equalization time being measured by counting pulses from a pulse generator so that said time will be very short as compared with the time for attaining the desired temperature in the building, said time being used for calculation of the correct moment for starting operation of the conditioning equipment so that no unnecessary time shall lapse during which the conditioning equipment is working but in spite of this the desired temperature shall be attained at a given time, a sensor (24) being provided for sensing the temperature ($t_v$) of the internal walls in the building, characterized by this last mentioned sensor (24) being arranged so as to energize a circuit (73, 76, 81, 83, 107) for feeding an additional voltage indicating starting operation of the conditioning equipment after the moment of the charge or discharge or voltage equalization ending, when otherwise the conditioning equipment would have turned over to normal functioning, e.g. thermostatically controlled function, said additional voltage being applied at least from said moment of end of the charge or discharge or voltage equalization remaining until the difference between the temperature ($t_v$) of said walls and the temperature ($t_i$) of the air in the building has decreased to a predetermined level, said circuit (73, 76, 81, 83, 107) being arranged to cause attraction of a first relay (69) for keeping said normally functioning conditioning equipment working independently of the state of a second relay (68), the contacts of said relays (69, 68) being connected in parallel to starting means for the said normally working conditioning equipment, said second relay (68) being exclusively controlled by the existing temperature of the air inside the building and the temperature outside the building.

2. Control unit according to claim 1, characterized in that the sensor (24) for the temperature of the internal walls of the building is, under normal conditions, disconnected from the electric equivalent circuit (27) but is connected to same when a timer (10) indicates starting of a pulse generator (12) governing the operation of the control unit.

3. Control unit according to claim 1 or 2, characterized in that a timer (112) is arranged to determine the period of time during which said first mentioned relay (69) shall remain attracted after the fall of said last mentioned relay (68).

4. Control unit according to claim 3, characterized in that the timer is under such an influence of the difference between the temperature ($t_v$) of the internal walls of the building and the temperature ($t_i$) of the air inside of the building, that said period of time will be longer at a greater difference of temperature and *vice versa*.

**Patentansprüche**

1. Steuerung zum Einleiten des Betriebs einer Klimatisierungsanlage, die die Temperatur in einem Gebäude nach einer Zeitspanne beeinflußt, während der die Anlage außer Betrieb war, mit einer elektrischen Ersatzschaltung (27), die die thermischen Eigenschaften des jeweiligen Gebäudes beim Heizen oder Kühlen simuliert und mit einer die Innenlufttemperatur ($t_i$) im Gebäude simulierenden Spannung sowie mit einer die Außenlufttemperatur ($t_u$) außerhalb des Gebäudes simulierenden Spannung gespeist wird, wobei ein Laden, Entladen oder ein Spannungsausgleich einer oder mehrerer Kondensatoren (103 bis 105) in der elektrischen Ersatzschaltung (27) über Widerstände (99 bis 102) stattfindet, um die Dauer zu simulieren, die erforderlich ist, um eine gewünschte Temperatur im Gebäude zu erreichen und die Lade-, Entlade- oder Spannungsausgleichstemperatur durch Abzählen der Impulse aus einem Impulsgenerator gemessen wird, so daß die Zeit sehr kurz im Vergleich mit der Zeit zum Erreichen der gewünschten Temperatur im Gebäude ist, und diese Zeit verwendet wird, um den richtigen Augenblick zum Einleiten des Betriebs der Klimatisierungsanlage zu berechnen, so daß diese nicht unnötig lange arbeitet, die gewünschte Temperatur aber dennoch zu einem gegebenen Zietpunkt erreicht wird, und mit einem Temperaturfühler (24) zum Erfassen der Temperatur ($t_v$) der Innenwände im Gebäude, dadurch gekennzeichnet, daß der letztgenannte Temperaturfühler (24) so angeordnet ist, daß er eine Schaltung (73, 76, 81, 83, 107) erregt, die eine Zusatzspannung einspeist, die den Betriebsanfang der Klimatisierungsanlage nach dem Ende des Ladens, Entladens oder des Spannungsausgleichs angibt, wenn ansonsten die Klimatisierungsanlage auf den Normalbetrieb, bspw. einen thermostatgeregelten Betrieb, übergegangen wäre, wobei die Zusatzspannung mindestens vom Zeitpunkt des Endes des Lade-, Entlade- oder Spannungsausgleichsvorgangs an angelegt wird, bis die Differenz zwischen der Temperatur ($t_v$) der Innenwände und der Innenlufttemperatur ($t_i$) im Gebäude auf einen vorbestimmten Wert abgesunken ist, daß die Schaltung (73, 76, 81, 83, 107) so angeordnet ist, daß ein erstes Relais (69) anzieht, um die normal arbeitende Klimatiesierungsanlage unabhängig vom Zustand eines zweiten Relais (68) arbeiten zu lassen, und daß die Kontakte der Relais (69, 68) parallel zueinander mit der Anlaßeinrichtung für die normal arbeitende Klimatisierungsanlage verbunden sind, wobei das zweite Relais (68) ausschließlich von der bestehenden Innenlufttemperatur im Gebäude und der Außenlufttemperatur außerhalb des Gebäudes gesteuert wird.

2. Steuerung nach Anspruch 1, dadurch gekennzeichnet, daß der Temperaturfühler (24) für die Temperatur der Gebäudeinnenwände unter normalen Bedingungen von der elektrischen Ersatzschaltung (27) abgetrennt ist, an sie aber angeschaltet wird, wenn ein Zeitgeber (Schaltung 10) das Einschalten eines Impulsgenerators (Schaltung 12) anzeigt, der den Betrieb der Steuerung steuert.

3. Steuerung nach Anspruch 1 oder 2, dadurch gekennzeichnet, daß ein Zeitgeber (112) die Zeitspanne bestimmt, während der das erste Relais (69) nach dem Abfallen des zweiten Relais (68) angezogen bleiben soll.

4. Steuerung nach Anspruch 3, dadurch gekennzeichnet, daß die Differenz zwischen der Temperatur ($t_v$) der Innenwände des Gebäudes und der Innenlufttemperatur ($t_i$) im Gebäude so auf den Zeitgeber (112) einwirkt, daß die Zeitspanne bei größerer Temperaturdifferenz länger wird und umgekehrt.

## Revendications

1. Dispositif de commande pour faire démarrer le fonctionnement d'un équipement de conditionnement qui est à même d'influencer la température dans un bâtiment après une période pendant laquelle l'équipement a été inactif, dans lequel un circuit électrique équivalent (27) est prévu pour simuler les propriétés thermiques du bâtiment associé pendant le chauffage ou le refroidissement, le circuit électrique équivalent (27) étant alimenté par une tension simulant la température intérieure ($t_i$) de l'air dans le bâtiment ainsi que par une tension simulant la température extérieure ($t_u$) en dehors du bâtiment, et une charge ou une décharge ou encore une égalisation de tensions d'un ou de plusieurs condensateurs (103 à 105) contenus dans le circuit électrique équivalent (27) se produit, par l'intermédiaire de résistances (99 à 102) afin de simuler la période requise pour atteindre une température souhaitée dans le bâtiment, le temps de charge ou de décharge ou d'égalisation de tensions étant mesuré par le comptage d'impulsions provenant d'un générateur d'impulsions, de sorte que le temps est très court comparé au temps nécessaire pour atteindre la température souhaitée dans le bâtiment, ce temps étant utilisé pour calculer le moment correct pour fair démarrer le fonctionnement de l'équipement de conditionnement, de sorte que l'équipement de conditionnement ne fonctionne pendant aucun temps inutile, mais qu'en dépît de cela, la température souhaitée soit atteinte à un moment donné, un détecteur (24) étant prévu pour détecter la température ($t_v$) des murs intérieurs dans le bâtiment, caractérisé en ce que ce dernier détecteur (24) est disposé de manière à exciter un circuit (73, 76, 81, 83, 107) pour fournir une tension supplémentaire indiquant le démarrage de l'équipement de conditionnement après l'arrivée à terme de la charge ou de la décharge ou de l'égalisation de tensions, alors que sinon l'équipement de conditionnement serait passé à un fonctionnement normal, par exemple à un fonctionnement à commande thermostatique, la tension supplémentaire étant appliquée au moins à partir du moment final de la charge ou de la décharge ou de l'égalisation de tensions et persistant jusqu'à ce que la différence entre la température ($t_v$) des murs et la température ($t_i$) de l'air dans le bâtiment ait diminué jusqu'à un niveau prédéterminé, le circuit (73, 76, 81, 83, 107) étant conçu pour provoquer l'attraction d'un premier relais (69) en vue de maintenir l'équipement de conditionnement qui fonctionne normalement en fonctionnement indépendamment de l'état d'un second relais (68), les contacts des relais (69, 68) étant connectés en parallèle à un dispositif de démarrage pour l'équipement de conditionnement fonctionnant normalement, le deuxième relais (68) étant commandé exclusivement par la température existante de l'air à l'intérieur du bâtiment et par la température à l'extérieur du bâtiment.

2. Dispositif de commande suivant la revendication 1, caractérisé en ce que le détecteur (24) pour la température des murs intérieurs du bâtiment est, dans des conditions normales, déconnecté du circuit électrique équivalent (27), mais est connecté à ce circuit lorsqu'un dispositif à temps (10) indique le démarrage d'un générateur d'impulsions (12) régissant le fonctionnement du dispositif de commande.

3. Dispositif de commande suivant la revendication 1 ou 2, caractérisé en ce qu'un dispositif à temps (112) est prévu pour déterminer la période pendant laquelle le premier relais 69 doit rester attiré après le déclenchement du relais (68) mentionné en dernier lieu.

4. Dispositif de commande suivant la revendication 3, caractérisé en ce que le dispositif à temps est soumis à l'influence de la différence entre la température ($t_v$) des murs intérieurs du bâtiment et la température ($t_i$) de l'air à l'intérieur du bâtiment, la période étant plus longue pour une différence de température plus élevée et inversement.

FIG. 1

FIG. 2

FIG. 6

FIG. 3

0 004 525

FIG. 4

FIG. 5